# EUROPEAN PATENT SPECIFICATION

(11) **EP 3 537 113 B1**
(45) Date of publication and mention of the grant of the patent: **28.07.2021**
(21) Application number: 18160704.5
(22) Date of filing: 08.03.2018
(51) Int. Cl.: G01F 1/684

(54) **APPARATUS FOR MEASURING THE FLOW OF A FLUID**
VORRICHTUNG ZUM MESSEN DES FLUSSES EINES FLUIDS
APPAREIL POUR MESURER LE DÉBIT D'UN FLUIDE

(43) Date of publication of application: 11.09.2019
(73) Proprietor: Sensirion AG, 8712 Stäfa (CH)
(72) Inventor: Hornung, Mark, 8712 Staefa (CH); Göppl, Martin, 8712 Staefa (CH)

(56) References cited:
- EP-A1- 2 725 328
- EP-A2- 1 443 314
- JP-A- H1 068 645
- US-A1- 2002 043 710
- US-A1- 2016 041 020

## Description

### Technical Field

The invention relates to an apparatus for measuring the flow of a fluid.

### Background Art

An apparatus for measuring the flow of a fluid are known, e.g. from EP 1 182 432 A1. Such apparatus comprises a housing that defines a measurement channel between parts of the housing. A semiconducting chip with a thermal flow sensor is located between the housing parts on one wall of the channel.

Such apparatuses are for example available from Sensirion™ in flow controller series SFC5x.

The sensitivity of an apparatus at higher flow rates may be limited in view of using micro-scale flow sensors. The limited sensitivity may lead to insufficient measurement results.

Flow rates may be increased by designing wider channels, see e.g. EP 2 725 328 A1. However, in case of a wide channel and a micro-scale flow sensor, electrical connections for the flow sensor, such as bond wires, may affect the flow of the fluid by causing turbulences in the fluid. Other than that, a dead volume may be generated between the flow sensor and the channel due to alignment accuracy which dead volume may affect the measurement, too.

A micro-scale flow sensor may be placed in a bypass in order to allow for higher flow rates. EP 1 443 314 A2 discloses an apparatus for measuring the flow of a fluid that has a bypass with two sections arranged in parallel to a primary duct. A flow sensor is arranged at one of the sections of the bypass.

However, bypass arrangements have limited sensitivity for low flow rates, are less robust to temperature- and pressure-variations and are more prone to clogging.

### Disclosure of the Invention

Hence, it is a general object of the invention to provide an apparatus suited to increase the flow range but at the same time to minimize measurement noise created by turbulences inside the channel. In other words, it is desired to increase the maximum flow range of the system without effecting turbulences which increase the noise of the measured signal.

The problem is solved by an apparatus for measuring the flow of a fluid according to the features of claim 1.

The flow of the fluid to be measured may be the flow of a gas or of a liquid or of an aerosol.

The apparatus comprises a thermal flow sensor. The thermal flow sensor is capable of measuring the flow of a fluid based on thermal measurements. For example, the thermal flow sensor may comprise a heater and thermosensors arranged at two opposite sides of the heater, such that in flow direction the fluid first passes the first thermosensor, then the heater, and then the second thermosensor. In a preferred embodiment, each thermosensor may be embodied as a thermocouple or as a thermopile comprising multiple thermocouples. The flow of the fluid can be determined subject to a difference between temperatures measured by the respective thermosensors upstream and downstream of the heater while heating.

The thermal flow sensor comprises a sensitive area. In case of the above mentioned design of the flow sensor including two thermosensors and a heater in between, an area enclosing these elements is referred to as sensitive area. However, the thermal flow sensor may exhibit different elements, e.g. only a single thermosensor downstream of the heater, or a different configuration, which then defines the sensitive area.

The thermal flow sensor is embodied as a semiconductor chip, preferably including at least a semiconducting substrate and the sensitive area. The sensitive area preferably is micro-processed. Given that the flow sensor is a thermal flow sensor it is preferred that the sensitive area is thermally isolated from the substrate. For this purpose, a membrane may be provided on or in which the sensitive area resides, which membrane is part of the sensitive area. The membrane may in one embodiment be a continuous membrane e.g. manufactured by etching a recess into the substrate, or a slotted membrane, or even a bridge or a wire.

The thermal flow sensor is arranged and configured to measure the flow of the fluid in a channel. The channel guides the fluid. The channel may in one embodiment be a confined duct comprising a measuring section. The measuring section is considered as a portion of the channel, i.e. preferably a 3D section of the channel, in which the flow of the fluid is measured. Accordingly, the thermal flow sensor is arranged to measure the flow of the fluid in the measuring section. The shape of the channel may also be modified prior to or after the location of the thermal flow sensor in order to control the flow, e.g. in order to reduce turbulences. Preferably, the apparatus includes a portion of the channel including the measuring section, while pipes or tubes may be connected to the apparatus for supplying and removing the fluid from the apparatus. Preferably, the flow of the fluid guided through the channel represents the entire flow to be measured instead of a portion of the flow branched off from a main duct into a bypass solely for measuring purposes.

The thermal flow sensor preferably is arranged such that at least the sensitive area is exposed to the fluid, i.e. in direct contact. However, in a different embodiment, the sensitive area may be out of contact with the fluid, however, be thermally coupled to the fluid, e.g. via a thermally conducting wall of the channel, provided at least in the measuring section.

Generally, a profile presently is understood as a cross sectional area perpendicular to a direction of the flow of the fluid. The profile of the measuring section preferably is understood as the profile of the channel at the location of the thermal flow sensor. Accordingly, the profile of the measuring section has a height orthogonal to the flow of the fluid and perpendicular to a plane defined by the sensitive area. The profile of the measuring section of the channel further shows a width orthogonal to its height. The height and / or the width of the measuring section may not necessarily be constant all along the respective dimension. In one embodiment, the profile of the measuring section may contain multiple segments which segments on their own show a constant width and a constant height, however which segments differ from each other in at least one of the width and the height. In addition, in one embodiment, the profile of the measuring section may differ from a profile of the remaining channel, i.e. a profile of sections of the channel preceding or succeeding the measuring section.

The width of the thermal flow sensor is considered as extension of the thermal flow sensor in parallel to the width of the profile of the measuring section. Accordingly, the width of the thermal flow sensor is the lateral dimension of the thermal flow sensor orthogonal to the flow of the fluid. The sensor width typically is considered as the dimension of the component embodying the thermal flow sensor. For example, in case the thermal flow sensor is embodied as a semiconductor chip, the extension of the semiconductor chip orthogonal to the flow of the fluid is considered as sensor width. In the same way, a sensitive area width is defined as width of the sensitive area orthogonal to the flow of the fluid. In case the sensitive area includes a membrane for example, or a slotted membrane, or a bridge or a wire, it is preferred that the sensor area width is the extension of the membrane etc. orthogonal to the flow of the fluid.

In the following, a core of the profile of the measuring section is defined as segment of the profile with maximal height. In addition, the core of the profile has a characteristic width orthogonal to its height. In one preferred embodiment, the profile of the measuring section has a constant, i.e. uniform width along its height. In this embodiment, the characteristic width of the core is the width of the profile i.e. the uniform width of the measuring section. In case the profile also has a uniform height, the profile and the core are identical, and are rectangular.

However, in a different embodiment, the profile of the measuring section is not of a uniform width all along its height. In such embodiment, the profile of the measuring section shows segments of different width, however, preferably of uniform width within each segment. In such embodiment, the characteristic width of the core is defined as minimal uniform width the core takes along at least a quarter of its height irrespective of any branches laterally emanating from the core or in view of any neck in the core effecting an intermittent width of the profile different from the characteristic width. Accordingly, in such embodiment the profile, i.e. the cross-sectional area of the measuring section comprises, and preferably consists of a core and either one or more branches extending laterally from the core in a direction along the width of the profile or one or more necks in the core, i.e. lateral diminutions. In branches the width of the profile consequently exceeds the characteristic width of the core while in necks the width of the profile consequently is less than the characteristic width of the core.

In such embodiments, the characteristic width of the core is considered as the minimal uniform width the core takes along at least a quarter of its height. Accordingly, the characteristic width is assumed to be a width the core shows along at least a quarter of its length. In case the profile comprises multiple segments with a uniform width each extending along at least a quarter of the height of the core, the characteristic width is defined as the minimal width amongst those widths. Segments of the core showing the minimal uniform width along at least a quarter of the height of the core, however, do not necessarily be connected: In a different embodiment segments of a uniform width may be intermitted by segments of different width, i.e. branches or necks. At least an accumulation of segments exhibiting the uniform characteristic width is required to extend at least along a quarter of the height of the core.

The maximal height of the profile at the same time representing the height of the core is dimensioned at least three times more than the characteristic width of the core. In a preferred embodiment, the maximal height of the profile at the same time representing the height of the core is dimensioned at least five times more than the characteristic width of the core, or preferably at least ten times more, or more preferably at least twenty times more.

In a preferred embodiment, the characteristic width of the core preferably is between 250 and 750 micrometres, and more preferably between 450 and 550 micrometres, or preferably between 100 and 450 micrometres, and more preferably between 180 and 330 micrometres.

The dimensioning of the profile of the measuring section as introduced is beneficial for measuring the real flow of the fluid in the channel since turbulences in the fluid causing measurement noise are reduced while at the same time the flow range is increased.

In a preferred embodiment, the sensitive area width is in a range between 100 micrometres and 1000 micrometres, and preferably between 100 micrometres and 500 micrometres. When putting the sensitive area width into relation to the characteristic width of the core, it is preferred that the characteristic width is equal to or less than the sensitive area width. Hence, the width of the core is equal to or smaller than the width of the sensitive area, which makes the profile of the core assuming a rather small width compared to an extensive height. As to the arrangement of such core it is preferred that the complete core is arranged underneath the sensing area, i.e. that the characteristic width of the core either matches the sensitive area width not only in absolute values but also in lateral position. In case the characteristic width is smaller than the sensor area width in absolute values, the sensitive area width represents lateral boundaries for the edges of the core. Preferably, the core is aligned centred with respect to a lateral extension of the thermal flow sensor and / or the sensitive area. In another embodiment, the profile is aligned centred with respect to a lateral extension of the thermal flow sensor and / or the sensitive area.

In one embodiment, the sensor width exceeds the characteristic width. And for all embodiments, it can preferably be assumed that the sensor width is not less than the sensitive area width.

In the following, another dimension is introduced which is referred to as adjacent width. The adjacent width is a lateral measure of a segment of the profile and again is defined as parallel to the plane defined by the sensitive area and orthogonal to the flow of the fluid. The adjacent width is considered as width of a segment of the profile that is adjacent / closest to the thermal flow sensor. Accordingly, the adjacent segment is the portion of the profile that is in contact with the fluid.

The adjacent width is less than the sensor width. Hence, the segment of the profile closest to the thermal flow sensor preferably is smaller than the extension of the sensor in this direction.

Alternatively, or in addition the adjacent width is equal to or larger than the characteristic width. Hence, if a segment closest to the thermal flow sensor differs in width from another segment of the profile, the adjacent width of this closest segment exceeds the characteristic width.

On the other hand, it is preferred that also the adjacent width is dimensioned rather small: Preferably, the adjacent width is less than four times the sensitive area width, and even more preferentially is between 110 % and 200 % of the sensitive area width. Instead, if the profile is of uniform width, this uniform width at the same time represents the characteristic width of the core and the adjacent width.

Preferably, the profile of the measuring channel comprises one or more branches as lateral extensions of the core. Such one or more branches may increase the cross sectional area of the measuring section in order to increase the flow rate without losing the advantage of a small flow channel geometry. In such embodiment, it is preferred to dimension a height of each of such branches such that a ratio of its height and the characteristic width of the core is between 0.5 and 1.5, and preferably is between 0.9 and 1.1. In other words, the height of each branch is approximately in the range of the characteristic width of the core. In absolute numbers, the height of each of the at least one branches preferably is smaller than 500 micrometres, preferably between 100 and 250 micrometres.

In case of branches, the profile of the measuring section preferably is T- or E- or Γ-shaped.

In particular, in case of branches, the dimensions of such branches may be very small and difficult to manufacture by milling. For this reason, it is preferred to first generate the channel in its envisaged dimensions by conventional manufacturing, such as by milling a recess into a body, whereas the profile of the measuring section possibly including tiny structures and / or high aspect ratios preferably is achieved by placing one or more prefabricated insets into the channel. Such one or more insets are designed to partially define the measuring section, and may be made from a metal such as aluminium or steel. In particular, such one or more insets may be made from essentially the same material as the body, in order to have similar thermal extension properties which enables a good fit of the inset in the body over a wide range of temperatures.

In particular, such one or more insets may be fastened by means of a wedge and/or by means of press fit. In particular, in case of fastening by means of a wedge, the wedge may comprise a ball.

In order to facilitate the assembly, it is preferred that the channel has a rectangular profile into which the at least one inset is placed. Profiles of a measuring section that are designed by means of insets preferably are one of Γ-, T-, I-, E-, [-,ι- or L-shaped.

An inset may have a rectangular profile, too. Hence, by means of a cubical inset having a rectangular profile, in particular I- T- or Γ-profiles of the measuring section can be generated.

However, more complex profiles of the measuring section e.g. aiming at maximizing a perimeter of the profile can also be designed by means of two or more insets prefabricated and disconnected from each other. Such insets may, for example, be stacked in the channel. In case each inset of multiple insets preferably is arranged and configured to partially define maximally two branches respectively. Each inset may be attached to a body defining the channel, and / or may be attached to each other, e.g. by gluing or fitting

As to a structural set-up of the apparatus, it is preferred that at least a support and a body such as the one mentioned above contribute to the apparatus. Preferably, the body contains a recess and by this means contributes to forming the measuring section of the channel while the support is a support for the thermal flow sensor, e.g. in form of a circuit board, such as PCB, and may cover the recess in the body. The thermal flow sensor preferably is attached to the support. The attachment of the thermal flow sensor to the support may preferably be achieved by gluing or soldering. The support may be fastened to the body or vice versa, and in particular arranged such that the thermal flow sensor faces the channel built by the body and the support. In one embodiment, the support is a plate that covers the recess in the body such that the channel is formed by the body and the support. Accordingly, in one embodiment, the body and the support together at least form the measuring section of the channel. The channel may further be extended e.g. by pipes or tubes connected an inlet and an outlet of the apparatus. Preferably, at least a part of the channel and a part of the measuring section are formed by a metal such as aluminium or steel.

In particular, when the thermal flow sensor is directly exposed to the fluid in the channel, it is preferred that the thermal flow sensor is arranged flush in the support at least at these locations. Hence, any surface of the thermal flow sensor that is exposed to the fluid and any surface of the support facing the channel and being exposed to the fluid are preferred to be arranged flush. This helps in preventing turbulences in the flow of the fluid caused by edges otherwise protruding into the flow of the fluid.

In case the support is a circuit board, an electrical connection between the support and the thermal flow sensor may be embodied by bond wires which electrically connect the thermal flow sensor to other elements on the circuit board such as ICs etc. In such embodiment, it is preferred that the channel is arranged and the characteristic width of the channel is dimensioned such that the bond wires are located outside of the channel. Bond wires protruding into the channel may also cause turbulences which are not desired in the measuring of the flow of the fluid. Accordingly, it is preferred that the bond wires at least do not reach into the channel, but are separated from the channel. Hence, the bond wires may reach into a recess of the body next to but separated from the channel. This leads to an arrangement, in which the adjacent width does not exceed the sensor width. The bond wires may by encapsulated by a glob of hardened material reaching into the recess.

For other preferred embodiments of the present invention it is referred to the dependent claims.

### Brief Description of the Drawings

The embodiments defined above and further embodiments, features and advantages of the present invention can be derived from examples of embodiments of the invention to be described hereinafter in connection with the following drawings. The figures show:
FIG. 1 an apparatus for measuring the flow of a fluid according to an embodiment of the present invention, a) in a sectional top view, b) in a cross sectional view along the line B of a), and c) in a longitudinal cut along the line C of a),
FIGs. 2 to 7 each an apparatus according to an embodiment of the present invention in a cross sectional view,
FIG. 8 an apparatus according to an embodiment of the present invention, a) in a sectional top view, b) in a cross sectional view along the line A-A' of a), c) in a cross sectional view along the line B-B' of a), d) in a top view, and e) in a cross sectional view along the line C-C' of d), and
FIGs. 9 and 10 diagrams of sample air flow measurements.

### Detailed description of the drawings

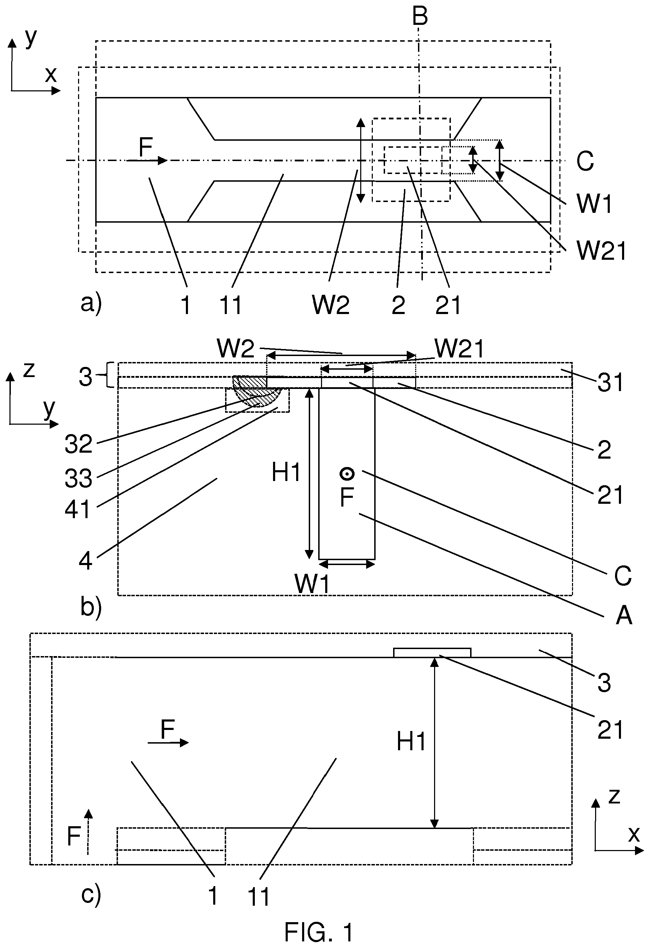

FIG. 1 illustrates an apparatus for measuring the flow of a fluid according to an embodiment of the present invention. Diagram 1a) is a sectional top view thereof, diagram 1b) is a cross sectional view along the line B of diagram 1a), diagram 1c) is a longitudinal cut along the line C of diagram 1a).

The apparatus, also referred to as sensor module or flow sensor module, comprises a channel 1 defined by at least a body 4 and a support 3 covering the body 4, preferably along the entire width of the body 4 in y-direction, and along its full length in x-direction. The body 4 comprises a recess co-defining the channel 1, while the support 3 covers the recess in the body 4 and thus limits the channel 1 in its vertical extension z.

It is assumed that a flow F of a fluid passes the channel 1 in a direction indicated by arrow F, i.e. along the longitudinal extension x of the channel 1.

The channel 1 comprises a measuring section 11. The measuring section 11 is defined as section of the channel 1 including a location in x-direction a thermal flow sensor 2 is arranged at.

The thermal flow sensor 2 is embodied as a semiconductor chip and includes a sensitive element having a sensitive area 21. In the present arrangement, the sensitive area 21 of the thermal flow sensor extends in a plane defined by the x- and y-axis.

As can be derived from the cross sectional view in diagram 1b), a profile A represents the cross sectional area of the measuring section 11 at the location of the thermal flow sensor 1. The profile A in this embodiment is of rectangular shape, with a height H1 in vertical z-direction, i.e. the dimension perpendicular to the plane x/y defined by the sensitive area 21 of the thermal flow sensor 1 and orthogonal to the longitudinal direction x taken by the flow of the fluid F. The profile A has a width W1, which is orthogonal to its height H1, and thus extends in lateral direction y.

The height H1 exceeds the width W1 of the profile A by far: In particular, the height H1 exceeds the width W1 by at least three times, thus improving the flow rate while at the same time avoiding turbulences in the flow resulting in noise in the measurement signal.

As can in particular be derived from diagram 1a), the measuring section 11 may not necessarily show the same profile as the rest of the channel 1: For example, the measuring section 11 may show a smaller profile A compared to the profile of the channel 1, such that the measuring section 11 in the present embodiment is designed as a neck in the channel 1. In the present embodiment, the shape of the measuring section 11 is achieved by reducing a width of the channel 1, while the height of the channel 1 remains the same in the measuring section 11, see diagram 1c).

Given that in the present embodiment, the support 3 for the thermal flow sensor 2 is embodied as a circuit board 31, the thermal flow sensor 1 preferably is attached to the circuit board 31 such that its sensitive area 21 faces the fluid in the channel 1. In a very preferred embodiment, the thermal flow sensor 2 is let-in flush into the support 3 such that there is no step transition between the thermal flow sensor 2 and the circuit board 31 at least in regions where the thermal flow sensor 2 is exposed to the fluid. Since in the present embodiment, a width W2 of the thermal flow sensor 1 exceeds the width W1 of the measuring section 11, a flush arrangement between the thermal flow sensor 2 and the support 3 is not relevant as far as the lateral edges of the thermal flow sensor 2 are concerned since any such transitions are not expose to the fluid anyway. However, as can be derived from diagram 1c), in the longitudinal dimension x of the thermal flow sensor 1 a transition between the thermal flow sensor 2 and the support 3 indeed is exposed to the fluid, such that the thermal flow sensor 2 preferably is let-in flush into the support 3 at least in these regions. By this means, a significant protrusion of the thermal flow sensor 2 into the channel 1 can be avoided which otherwise may cause undesired turbulences.

Given that in the present embodiment the support 3 for the thermal flow sensor is a circuit board 31, the thermal flow sensor 1 preferably is electrically connected to the circuit board 31, e.g. by means of bond wires 32. The arrangement of the thermal flow sensor 2 and its dimensioning are preferably selected such that the bond wires 32 are located outside the measuring section 11. In the present example, a recess 41 in the body 4 is provided for receiving the bond wires 32, and a glob top encapsulation 33 for the bond wires 32 is provided for protection purposes. By means of such an arrangement, the bond wires 32 do not reach into the fluid 11 where they otherwise may cause turbulences.

Additional dimensions of the apparatus are introduced in the following which dimensions are also relevant for subsequent embodiments: The thermal flow sensor 2 has a sensor width W2 orthogonal to the flow F of the fluid and parallel to the plane defined by the sensitive area 21. The sensitive area 21 of the thermal flow sensor 2 has a sensitive area width W21 orthogonal to the flow F of the fluid and parallel to the plane defined by the sensitive area 21.

As can be derived from FIG. 1, it is preferred that in case of a rectangular profile A the complete profile A extends underneath the thermal flow sensor 2, i.e. in lateral dimension y exclusively extends within boundaries set by the lateral edges of the thermal flow sensor 2. In another variant (not shown), it is preferred that the complete profile A extends underneath the sensitive area 21 of the thermal flow sensor 2, i.e. in lateral dimension y exclusively extends within boundaries set by the lateral edges of the sensitive area 21.

Preferably, the sensitive area width W21 is in a range from 100 micrometres to 1000 micrometres, preferably from 100 micrometres to 500 micrometres. These dimensions are also preferred for the embodiments shown in the subsequent Figures.

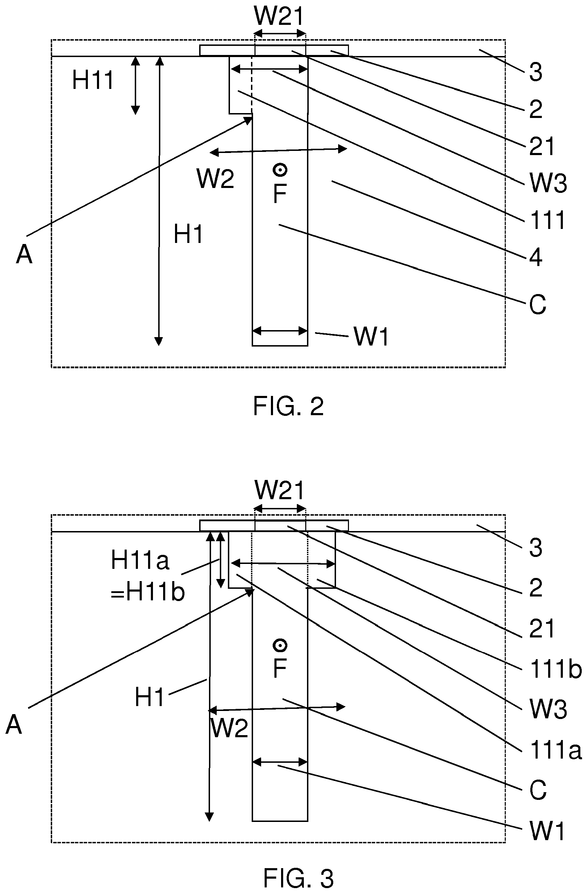

FIG. 2 shows an embodiment of an apparatus according to another embodiment of the present invention in a cross sectional view. In contrast to the embodiment of FIG. 1, the profile A of the measuring section now deviates from a rectangle, and in particular is asymmetric. Specifically, the profile A contains a segment adjacent to the thermal flow sensor 2 that shows a width W3, also referred to as adjacent width W3 that is different from the width W1 of the remaining profile A. For determining an appropriate ratio of the height and the width of the profile A of the measuring section, a virtual core C is defined as segment of the profile A which core C represents the area of the profile A where the height H1 of the profile A is maximal. Accordingly, in the present example, the core C is represented by the rectangular segment of the profile A reaching deep into the body 4 and showing maximal height H1, since a height H11 of a branch 111 of the adjacent segment is by far less than height H1. The relevant width of a non-rectangular profile A is assumed to be the width of the core C: Hence, in the present example, the characteristic width of the core C is assumed to be the width W1. Accordingly, the height H1 of the core is more than three times the characteristic width W1 of the core.

In FIG. 2, as well as in all the subsequent embodiments of Figures 3 to 7, the core C of the profile A completely extends underneath the thermal flow sensor 2, i.e. in lateral dimension y the core C exclusively extends within boundaries set by the lateral edges of the thermal flow sensor 2. In another variant (not shown), it is preferred that the complete core C extends underneath the sensitive area 21 of the thermal flow sensor 2, i.e. in lateral dimension y exclusively extends within boundaries set by the lateral edges of the sensitive area 21.

Preferably, the core C is aligned centred with respect to a lateral extension of the thermal flow sensor 2 and / or the sensitive area 21. In another embodiment, the entire profile A may be arranged centred with respect to a lateral extension of the thermal flow sensor 2 and / or the sensitive area 21.

Preferably, the adjacent width W3 is equal to or larger than the characteristic width W1 of the core C. On the other hand, it is preferred that the adjacent width W3 is less than the sensor width W2. These preferred dimensions may also be applied to all of the subsequent embodiments.

FIG. 3 shows an embodiment of an apparatus according to another embodiment of the present invention in a cross sectional view. In contrast to the embodiment of FIG. 2, the adjacent area of the profile A includes a branch 111a not only to the left but also a branch 111b to the right. Accordingly, the adjacent width W3 exceeds the adjacent width W3 of the embodiment of FIG. 2. Still, the core C and its dimensions H1 and W1 remain as in the embodiment of FIG. 2 given that the core C is defined as portion of the profile A with maximal height H1. The characteristic width W1 of the core C remains the minimal width the core C takes along at least a quarter of its maximal height H1 which characteristic width presently is the width W1. And still, the adjacent width W3 is equal to or larger than the characteristic width W1. On the other hand, it is preferred that the adjacent width W3 is less than the sensor width W2.

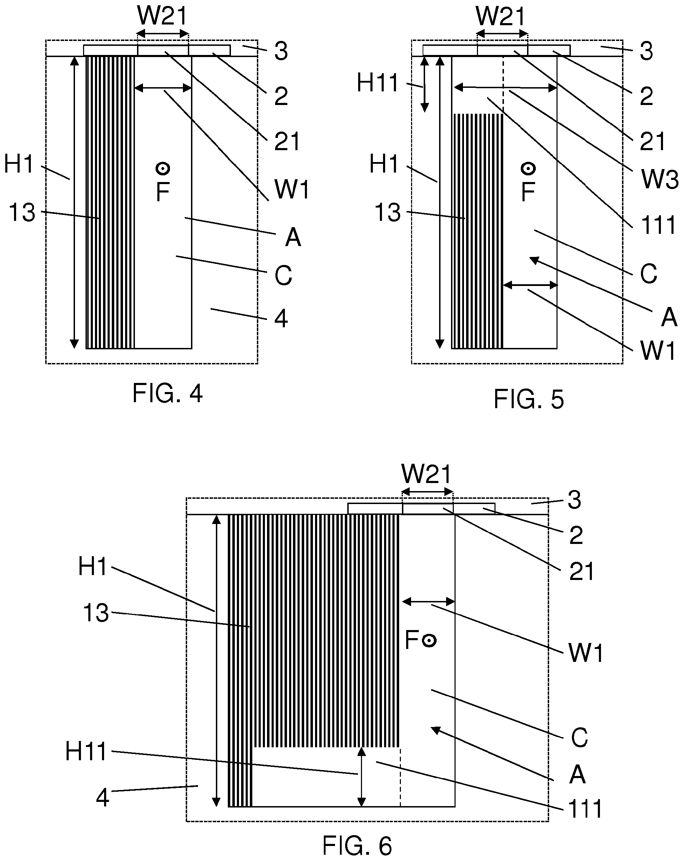

FIG. 4 to 7 illustrate embodiments of an apparatus in cross sectional view wherein the measuring section of the channel and hence its profile A is defined by at least one inset 13. An inset is understood as prefabricated element that is inserted into the channel in order to define the measuring section of the channel. Given that dimensions of the measuring section - in particular of its profile A e.g. in view of branches or necks - may be tiny and difficult to manufacture by milling a body, only the shape of the channel may be manufactured by milling, while the more delicate dimensions of its measuring section may be formed by inserting one or more insets into the channel.

In the embodiment of FIG. 4, the profile A and its arrangement relative to the thermal flow sensor 2 is similar or identical to the embodiment of FIG. 1. However, the profile A not only is formed by the shape of the body 4 (and the support 3 or the thermal flow sensor 2, of course). Instead, an inset 13 of the height H1 of the channel 1 contributes to forming the measuring section and its profile A. Accordingly, the recess in the channel 1 may conventionally be manufactured e.g. by milling the body 4, while the inset 13 is manufactured beforehand, e.g. by milling or moulding or other processes, and subsequently is inset into the recess of the body 4 in order to generate a measuring section with a width W1 smaller than the width of the rest of the channel 1.

In the embodiment of FIG. 5, the profile A of the measuring section is similar or identical to the embodiment of FIG. 2. However, the positioning of the profile A is different with respect to the centre of the thermal flow sensor 2, since the core C no longer is centred relative to the sensitive area 21. In addition, the profile A is generated by applying an inset 13 which has a height less than the height H1 of the channel 1 in order to generate the branch 111. Accordingly, by applying the inset 13, a measuring section is generated with a core C of height H1 and characteristic width W1, and an adjacent section of height H11 and adjacent width W3.

In the embodiment of FIG. 6, the profile of the measuring section again is generated by means of an inset 13. This inset 13 generates a profile A with a core of maximal height H1 and characteristic width W1, while at the bottom of the core C, branch 111 of height H11 extends laterally.

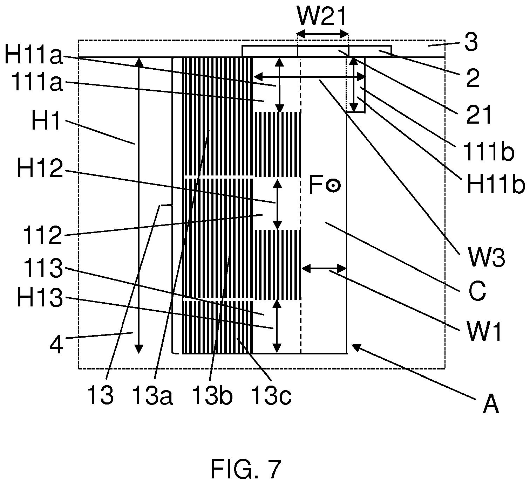

In the embodiment of FIG. 7, the profile A of the measuring section is similar or identical to the embodiment of FIG. 2. The core C of the profile A again is positioned similar to the embodiment of FIG. 2, i.e. centred with respect to the sensitive area 21. However, unlike in FIG. 2, three branches 111a, 112 and 113 laterally extend from the core C to the left hand side, while another branch 111b extends from the core C to the right hand side. The profile A again is generated by applying an inset arrangement 13 into the channel, this time consisting of three insets 13a, 13b and 13c. Accordingly, by inserting the inset arrangement 13, a profile A is generated including a core C of height H1 and characteristic width W1, and an adjacent section of height H11 and adjacent width W3. The insets 13a, 13b and 13c may be stacked on each other, and preferably are fixed to each other and to the body 4, e.g. by gluing.

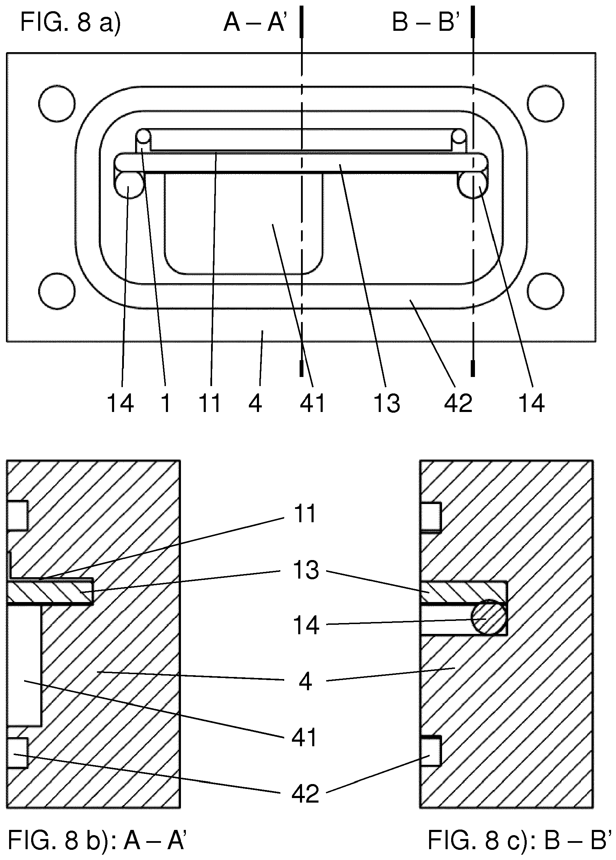

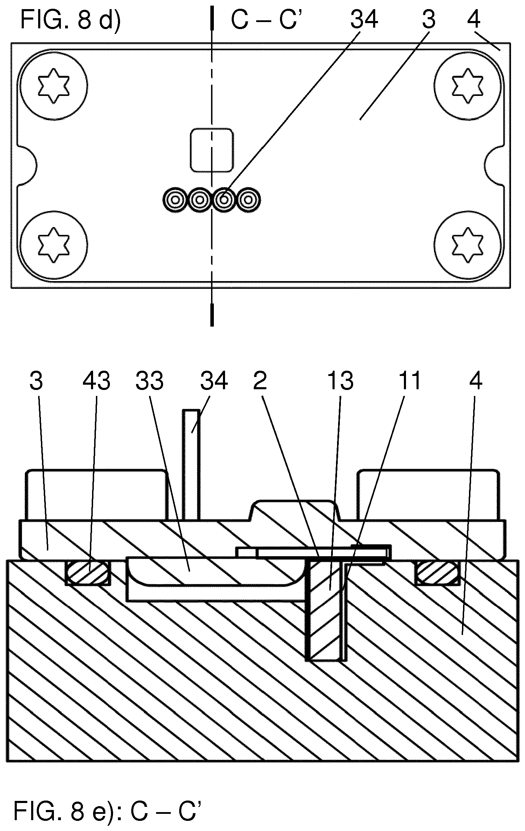

FIG. 8 illustrates an apparatus according to an embodiment of the present invention, a) in a sectional top view, b) in a cross sectional view along the line A-A' of a), c) in a cross sectional view along the line B-B' of a), d) in a top view, and e) in a cross sectional view along the line C-C' of d). In the embodiment of FIG. 8, the profile A of the measuring section 11 is Γ-shaped. The measuring section 11 and hence its profile A is defined by one inset 13. The inset 13 is fastened by means of a wedge 14 in the body 4. Here, the wedge is a ball. The body comprises a recess for an O-ring 42 which allows to close the body 4 with the support 3 in a fluid tight manner by means of an O-ring 43 in the recess for an O-ring 42. The thermal flow sensor 2 is arranged flush in the support 3. The thermal flow sensor 2 is electrically connected by bond wires (not shown) to an electrical connector 34 which is comprised in the support 3. The glob top 33 protects the bond wires against mechanical impact, in particular during assembly of the apparatus. The recess 41 in the body is arranged and configured to house the glob top 33.

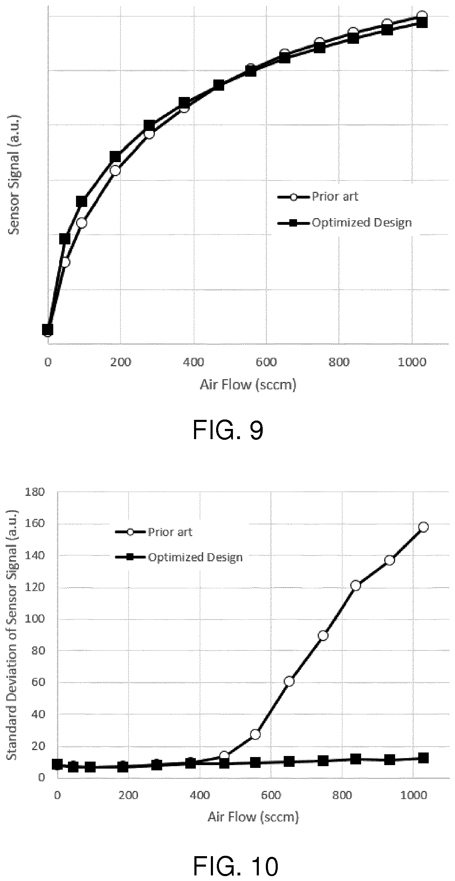

FIGs. 9 and 10 show diagrams of measurements carried out with an apparatus according to an embodiment of the present invention - labelled "optimized design" - relative to measurements carried out by an apparatus of the state of the art having a mainpass arrangement, e.g. with a rectangular profile of the measuring section where the width of the profile exceeds its height - labelled "prior art". The flow measured is a flow of air.

FIG. 9 shows the average of the raw sensor signal for hundred repeated measurements. It can be derived that the sensitivity of the present design is comparable to a state of the art mainpass arrangement. A comparable bypass arrangement (not shown) would be significantly less sensitive for small flow rates.

FIG. 10 shows the standard deviation of the raw sensor signal for hundred repeated measurements. It can be derived that the present design is advantageous for large flow rates because it shows a significantly reduced sensor signal noise as compared to the prior art.

While there are shown and described presently preferred embodiments of the invention, it is to be distinctly understood that the invention is not limited thereto but may be otherwise variously embodied and practiced within the scope of the following claims.

### List of Reference Signs

| | | | |
|---|---|---|---|
| F | flow of a fluid | | |
| | | 4 | body |
| 1 | channel | 41 | recess |
| 11 | measuring section | 42 | recess for O-ring |
| A | profile | 43 | O-ring |
| C | core | | |
| 111, 111a, 111b, 112, 113 | branches | H1 | maximal height of profile |
| 13, 13a, 13b, 13c | inset | H11, | H11a, H11b, H12, H13 heights of branches |
| 14 | wedge | | |
| 2 | thermal flow sensor | | |
| 21 | sensitive area | W1 | characteristic width of core |
| 3 | support | | |
| 31 | circuit board | W2 | sensor width |
| 32 | bond wire | W21 | sensitive area width |
| 33 | glob top | | |
| 34 | electrical connector | W3 | adjacent width |

## Claims

1. Apparatus for measuring a flow of a fluid, comprising
a thermal flow sensor (2) comprising a sensitive area (21),
a channel (1) for guiding the fluid, which channel (1) comprises a measuring section (11) with a profile (A) perpendicular to a direction of the flow (F) of the fluid, which profile (A) has a height orthogonal to the flow (F) of the fluid and perpendicular to a plane defined by the sensitive area (21), and a width orthogonal to its height
wherein the thermal flow sensor (2) has a sensor width (W2) orthogonal to the flow (F) of the fluid and parallel to the plane defined by the sensitive area (21),
wherein the sensitive area (21) is comprised in a semiconductor chip, wherein the sensor width (W2) is a width of the semiconductor chip perpendicular to the flow (F) of the fluid,
wherein the profile (A) comprises an area adjacent to the sensitive area (21) which adjacent area has an adjacent width (W3) defined as lateral extension of the adjacent area parallel to the plane defined by the sensitive area (21) and orthogonal to the flow (F) of the fluid, and
wherein the adjacent width (W3) is less than the sensor width (W2),
wherein a core (C) of the profile (A) is defined as area of the profile (A) with maximal height (H1),
wherein the core (C) has a characteristic width (W1) defined as minimal uniform width the core (C) takes along at least a quarter of its height (H1) irrespective of any branches (111) laterally emanating from the core (C) or in view of any neck in the core (C) effecting an intermittent width of the profile (A) different from the characteristic width (W1),
wherein the thermal flow sensor (2) is arranged and configured to measure the flow of the fluid (F) in the measuring section (11),
**characterized by** the maximal height (H1)being at least three times larger than the characteristic width (W1).

2. Apparatus according to claim 1,
wherein the maximal height (H1)is at least five times larger than the characteristic width (W1), preferably wherein the maximal height (H1) is at least ten times larger than the characteristic width (W1), more preferably wherein the maximal height (H1)is at least twenty times larger than the characteristic width (W1).

3. Apparatus according to claim 1 or claim 2,
wherein the adjacent width (W3) is equal to or larger than the characteristic width (W1).

4. Apparatus according to any of the preceding claims,
wherein the sensitive area (21) has a sensitive area width (W21) orthogonal to the flow (F) of the fluid and parallel to the plane defined by the sensitive area (21), and
preferably wherein the sensitive area width (W21) is in a range from 100 micrometres to 1000 micrometres, preferably from 100 micrometres to 500 micrometres,
preferably wherein the characteristic width (W1) is equal to or less than the sensitive area width (W21),
preferably wherein the complete core (C) is arranged underneath the sensing area (21).

5. Apparatus according to claim 3 in combination with claim 4,
wherein the adjacent width (W3) is less than four times the sensitive area width (W21), preferentially between 110 % and 200 % of the sensitive area width (W21).

6. Apparatus according to any of the preceding claims,
wherein the sensitive area (21) is micro-processed.

7. Apparatus according to any of the preceding claims,
wherein the sensitive area (21) comprises a membrane, a slotted membrane, a bridge or a wire, and preferentially wherein the sensitive area width (W21) is a width of the membrane, the slotted membrane, the bridge or the wire, respectively, perpendicular to the flow (F) of the fluid.

8. Apparatus according to any of the preceding claims,
wherein the profile of the core (C) or of the measuring section (11) is rectangular.

9. Apparatus according to any of the preceding claims,
comprising a body (4) and a support (3),
wherein the thermal flow sensor (2) is attached to the support (3),
wherein the body (4) and the support (3) are arranged and configured such as to form at least the measuring section (11) of the channel (1),
wherein the sensing area (21) is exposed to the flow (F) of the fluid in the channel (1),
preferentially wherein the thermal flow sensor (2) is let-in flush into the support (3) at least in areas where the thermal flow sensor (2) is exposed to the flow (F) of the fluid.

10. Apparatus according to claim 9,
wherein the support (3) comprises a circuit board (31), and
preferably wherein one or more bond wires (32) electrically contact the thermal flow sensor (2) with the circuit board (31),
preferably wherein the channel (1) is arranged and the characteristic width (W1) of the channel (1) is configured such that the bond wires (32) are located outside of the channel (1), preferably in a recess (41) of the body (4).

11. Apparatus according to any of the preceding claims,
wherein the measuring section (11) comprises at least one branch (111, 111a, 111b, 112, 113),
wherein a height (H11a, H11b, H12, H13) of each of the at least one branches (111, 111a, 111b, 112, 113) is a maximal vertical extension of the respective branch (111, 111a, 111b, 112, 113) orthogonal to the flow (F) of the fluid and orthogonal to the plane defined by the sensitive area (21), and
wherein a ratio between the height (H11, H11a, H11b, H12, H13) of each of the at least one branches (111, 111a, 111b, 112, 113) and the characteristic width (W1) is between 0.5 and 1.5, preferably between 0.9 and 1.1,
preferably wherein the profile (A) of the measuring section (11) is T- or Γ-shaped.

12. Apparatus according to any of the preceding claims,
comprising at least one inset (13),
wherein the at least one inset (13) is arranged and configured to partially define the measuring section (11),
preferably wherein the at least one inset (13) is inset into the channel (1),
preferably wherein the at least one inset (13) is made from the same material as the body (4), preferably wherein the at least one inset (13) comprises metal or consists of metal ,
preferably wherein the resulting profile (A) of the measuring section (11) is Γ-, T-, I-, E-, [-, ι- or L-shaped.

13. Apparatus according to claim 12,
wherein at least one of the at least one insets (13) is fastened by means of a wedge (14) and/or by means of press fit,
preferably wherein the wedge comprises a ball.

14. Apparatus according to claim 11 in combination with claim 12 or 13,
wherein each of the at least one insets (13, 13a, 13b, 13c) is arranged and configured to partially define maximally two branches (111, 111a, 111b, 112, 113), respectively.

15. Apparatus according to any of the preceding claims 11 to 14,
wherein the height (H11, H11a, H11b, H12, H13) of each of the at least one branches (111, 111a, 111b, 112, 113) is smaller than 500 micrometres, preferably between 100 and 250 micrometres.

16. Apparatus according to any of the preceding claims,
wherein at least part of the channel (1) and part of the measuring section (11) are formed by a metal.

17. Apparatus according to any of the preceding claims,
wherein the profile (A) of the measuring section (11) and/or of the core (C) is aligned centred with respect to a lateral extension of the thermal flow sensor (2) and / or the sensitive area (21).

## Patentansprüche

1. Gerät zur Flussmessung eines Fluids umfassend:
Einen thermischen Flusssensor (2) umfassend eine sensitive Fläche (21),
einen Kanal (1) zur Führung des Fluids, welcher Kanal (1) einen Messabschnitt (11) umfasst mit einem Profil (A) senkrecht zu einer Richtung des Flusses (F) des Fluids, welches Profil (A) eine Höhe orthogonal zum Fluss (F) des Fluids und senkrecht zu einer Ebene definiert durch die sensitive Fläche (21) und einer Breite orthogonal zur Höhe,
worin der thermische Flusssensor (2) eine Sensorbreite (W2) orthogonal zum Fluss (F) des Fluids und parallel zur Ebene definiert durch die sensitive Fläche (21) hat,
worin die sensitive Fläche (21) in einem Halbleiterchip umfasst ist, wobei die Sensorbreite (W2) eine Breite des Halbleiterchips senkrecht zum Fluss (F) des Fluids ist,
worin das Profil (A) eine der sensitiven Fläche (21) anliegende Fläche umfasst, welche anliegende Fläche eine anliegende Breite (W3), definiert als seitliche Ausdehnung der anliegenden Fläche parallel zur Ebene definiert durch die sensitive Fläche (21) und orthogonal zum Fluss (F) des Fluids, hat, und
worin die anliegende Breite (W3) kleiner ist als die Sensorbreite (W2),
worin ein Kernstück (C) des Profils (A) definiert ist als Fläche des Profils (A) mit maximaler Höhe (H1),
wobei das Kernstück (C) eine charakteristische Breite (W1), definiert als minimale gleichmässige Breite, die das Kernstück (C) entlang mindestens eines Viertels seiner Höhe (H1) annimmt, hat ungeachtet von Verzweigungen (111), die seitlich aus dem Kernstück (C) herausragen oder angesichts von Verjüngungen im Kernstück (C), die eine zeitweilige Breite des Profils (A) verursachen, die anders ist als die charakteristische Breite (W1),
worin der thermische Flusssensor (2) angeordnet und konfiguriert ist, den Fluss (F) des Fluids im Messabschnitt (11) zu messen,
**gekennzeichnet dadurch, dass** die maximale Höhe (H1) mindestens dreimal grösser als die charakteristische Breite (W1) ist.

2. Gerät nach Anspruch 1,
worin die maximale Höhe (H1) mindestens fünfmal grösser als die charakteristische Breite (W1) ist, bevorzugt worin die maximale Höhe (H1) mindestens zehnmal grösser als die charakteristische Breite (W1) ist,
besonders bevorzugt worin die maximale Höhe (H1) mindestens zwanzigmal grösser als die charakteristische Breite (W1) ist.

3. Gerät nach Anspruch 1 oder Anspruch 2,
worin die anliegende Breite (W3) gleich gross wie oder grösser als die charakteristischen Breite (W1) ist.

4. Gerät nach einem der vorangehenden Ansprüche,
worin die sensitive Fläche (21) eine Breite (W21) der sensitiven Fläche orthogonal zum Fluss (F) des Fluids und parallel zur Ebene, definiert durch die sensitive Fläche (21), hat und
bevorzugt worin die Breite (W21) der sensitiven Fläche im Bereich von 100 Mikrometer bis 1000 Mikrometer ist, bevorzugt von 100 Mikrometer bis 500 Mikrometer,
bevorzugt worin das gesamte Kernstück (C) unter der sensitiven Fläche (21) angeordnet ist.

5. Gerät nach Anspruch 3 in Kombination mit Anspruch 4,
worin die anliegende Breite (W3) kleiner als viermal die Breite (W21) der sensitiven Fläche ist, bevorzugt zwischen 110% und 200% der Breite (W21) der sensitiven Fläche.

6. Gerät nach einem der vorangehenden Ansprüche,
worin die sensitive Fläche (21) mikroprozessiert ist.

7. Gerät nach einem der vorangehenden Ansprüche,
worin die sensitive Fläche (21) eine Membran, eine geschlitzte Membran, eine Brücke oder einen Draht umfasst, und bevorzugt worin die Breite (W21) der sensitiven Fläche eine Breite der Membran, der geschlitzten Membran, der Brücke oder des Drahts ist, jeweils senkrecht zum Fluss (F) des Fluids.

8. Gerät nach einem der vorangehenden Ansprüche,
worin das Profil des Kernstücks (C) oder des Messabschnitts (11) rechteckig ist.

9. Gerät nach einem der vorangehenden Ansprüche,
umfassend einen Körper (4) und einen Träger (3),
worin der thermische Flusssensor (2) am Träger (3) befestigt ist,
worin der Körper (4) und der Träger (3) so angeordnet und konfiguriert sind, dass sie mindestens den Messabschnitt (11) des Kanals (1) bilden,
worin die sensitive Fläche (21) dem Fluss (F) des Fluids im Kanal (1) ausgesetzt ist,
bevorzugt worin der thermische Flusssensor (2) mindestens in Bereichen, wo der thermische Flusssensor (2) dem Fluss (F) des Fluids ausgesetzt ist, bündig im Träger (3) eingelassen ist.

10. Gerät nach Anspruch 9,
worin der Träger (3) eine Leiterplatte (31) umfasst, und
bevorzugt worin einer oder mehr Bonddrähte (32) den thermischen Flusssensor (2) elektrisch mit der Leiterplatte (31) kontaktieren,
bevorzugt worin der Kanal (1) so angeordnet und die charakteristische Breite (W1) so konfiguriert ist, dass die Bonddrähte (32) ausserhalb des Kanals (1) liegen, bevorzugt in einer Vertiefung des Körpers (4).

11. Gerät nach einem der vorangehenden Ansprüche,
worin der Messabschnitt (11) mindestens eine Verzweigung (111, 111a, 111b, 112, 113) umfasst,
worin eine Höhe (H11a, H11b, H12, H13) jeder der mindestens einen Verzweigung (111, 111a, 111b, 112, 113) orthogonal zum Fluss (F) des Fluids und orthogonal zur Ebene, definiert durch die sensitive Fläche, ist, und,
worin ein Verhältnis zwischen der Höhe (H11a, H11b, H12, H13) jeder der mindestens einen Verzweigung (111, 111a, 111b, 112, 113) und der charakteristischen Breite (W1) zwischen 0.5 und 1.5 beträgt, bevorzugt zwischen 0.9 und 1.1,
bevorzugt worin das Profil (A) des Messabschnitts (11) T- oder Γ-förmig ist.

12. Gerät nach einem der vorangehenden Ansprüche,
umfassend mindestens einen Einsatz (13),
worin der mindestens eine Einsatz (13) so angeordnet und konfiguriert ist, dass er den Messabschnitt (11) teilweise definiert,
bevorzugt worin der mindestens eine Einsatz (13) im Kanal (1) eingesetzt ist,
bevorzugt worin der mindestens eine Einsatz (13) aus dem gleichen Material wie der Körper (4) gefertigt ist,
bevorzugt, worin der mindestens eine Einsatz (13) Metall umfasst oder aus Metall besteht,
bevorzugt, worin das resultierende Profil (A) des Messabschnitts (11) Γ-, T-, I-, E-, [-, ι- oder L-förmig ist.

13. Gerät nach Anspruch 12,
worin mindestens einer des mindestens einen Einsatzes (13) mit Hilfe eines Keil (14) und/oder einer Presspassung befestigt ist,
bevorzugt worin der Keil eine Kugel umfasst.

14. Gerät nach Anspruch 11 in Kombination mit Anspruch 12 oder Anspruch 13,
worin jeder des mindestens einen Einsatzes (13, 13a, 13b, 13c) so angeordnet und konfiguriert ist, dass er höchstens zwei Verzweigungen (111, 111a, 111b, 112, 113) teilweise definiert.

15. Gerät nach einem der vorangehenden Ansprüche 11-14,
worin die Höhe (H11, H11a, H11b, H12, H13) jeder der mindestens einen Verzweigung (111, 111a, 111b, 112, 113) kleiner als 500 Mikrometer, bevorzugt zwischen 100 und 250 Mikrometer, ist.

16. Gerät nach einem der vorangehenden Ansprüche,
worin mindestens ein Teil des Kanals (1) und ein Teil des Messabschnitts (11) aus Metall bestehen.

17. Gerät nach einem der vorangehenden Ansprüche,
worin das Profil (A) des Messabschnitts (11) und/oder des Kernstücks (C) zentriert bezüglich einer seitlichen Ausdehnung des thermischen Flusssensors (2) und/oder der sensitiven Fläche (21) ausgerichtet ist.

## Revendications

1. Appareil de mesure d'un débit d'un fluide, comprenant
un capteur de flux thermique (2) comprenant une zone sensible (21),
un canal (1) pour guider le fluide, lequel canal (1) comprend une section de mesure (11) avec un profil (A) perpendiculaire à une direction d'écoulement (F) du fluide, lequel profil (A) a une hauteur orthogonal à l'écoulement (F) du fluide et perpendiculaire à un plan défini par la zone sensible (21), et une largeur orthogonale à sa hauteur,
dans lequel le capteur de flux thermique (2) a une largeur de capteur (W2) orthogonale au flux (F) du fluide et parallèle au plan défini par la zone sensible (21),
dans lequel la zone sensible (21) est comprise dans une puce semi-conductrice, dans lequel la largeur du capteur (W2) est une largeur de la puce semi-conductrice perpendiculaire à l'écoulement (F) du fluide,
dans lequel le profil (A) comprend une zone adjacente à la zone sensible (21), laquelle zone adjacente a une largeur adjacente (W3) définie comme extension latérale de la zone adjacente parallèle au plan défini par la zone sensible (21) et orthogonale à l'écoulement (F) du fluide, et
dans lequel la largeur adjacente (W3) est inférieure à la largeur du capteur (W2),
dans lequel un noyau (C) du profil (A) est défini comme aire du profil (A) avec hauteur maximale (H1),
dans lequel le noyau (C) a une largeur caractéristique (W1) définie comme largeur uniforme minimale que le noyau (C) prend sur au moins un quart de sa hauteur (H1) indépendamment des branches (111) émanant latéralement du noyau (C) ou au vu de tout col dans le noyau (C) réalisant une largeur intermittente du profil (A) différente de la largeur caractéristique (W1),
dans lequel le capteur de débit thermique (2) est agencé et configuré pour mesurer le débit du fluide (F) dans la section de mesure (11),
**caractérisé en ce que** la hauteur maximale (H1) est au moins trois fois plus grande que la largeur caractéristique (W1) .

2. Appareil selon la revendication 1,
dans lequel la hauteur maximale (H1) est au moins cinq fois plus grande que la largeur caractéristique (W1), de préférence dans laquelle la hauteur maximale (H1) est au moins dix fois plus grande que la largeur caractéristique (W1), plus préférablement dans laquelle la hauteur maximale (H1) est au moins vingt fois plus grande que la largeur caractéristique (W1) .

3. Appareil selon la revendication 1 ou la revendication 2,
dans lequel la largeur adjacente (W3) est égale ou supérieure à la largeur caractéristique (W1).

4. Appareil selon l'une quelconque des revendications précédentes,
dans lequel la zone sensible (21) a une largeur de zone sensible (W21) orthogonale à l'écoulement (F) du fluide et parallèle au plan défini par la zone sensible (21), et
de préférence dans lequel la largeur de zone sensible (W21) est dans une plage de 100 micromètres à 1000 micromètres, de préférence de 100 micromètres à 500 micromètres,
de préférence dans lequel la largeur caractéristique (W1) est égale ou inférieure à la largeur de zone sensible (W21),
de préférence dans lequel le noyau complet (C) est disposé sous la zone de détection (21).

5. Appareil selon la revendication 3 en combinaison avec la revendication 4,
dans lequel la largeur adjacente (W3) est inférieure à quatre fois la largeur de la zone sensible (W21), de préférence entre 110 % et 200 % de la largeur de la zone sensible (W21).

6. Appareil selon l'une quelconque des revendications précédentes,
dans lequel la zone sensible (21) est micro-fabriquée.

7. Appareil selon l'une quelconque des revendications précédentes,
dans lequel la zone sensible (21) comprend une membrane, une membrane fendue, un pont ou un fil, et préférentiellement dans lequel la largeur de la zone sensible (W21) est une largeur de la membrane, de la membrane fendue, du pont ou du fil, respectivement, perpendiculairement à l'écoulement (F) du fluide.

8. Appareil selon l'une quelconque des revendications précédentes,
dans lequel le profil du noyau (C) ou de la section de mesure (11) est rectangulaire.

9. Appareil selon l'une quelconque des revendications précédentes,
comprenant un corps (4) et un support (3),
dans lequel le capteur de flux thermique (2) est fixé au support (3),
dans lequel le corps (4) et le support (3) sont agencés et configurés de manière à former au moins la section de mesure (11) du canal (1),
dans lequel la zone de détection (21) est exposée à l'écoulement (F) du fluide dans le canal (1),
préférentiellement dans lequel le capteur de flux thermique (2) est encastré à fleur dans le support (3) au moins dans les zones où le capteur de flux thermique (2) est exposé à l'écoulement (F) du fluide.

10. Appareil selon la revendication 9,
dans lequel le support (3) comprend une carte de circuit imprimé (31), et
de préférence dans lequel un ou plusieurs fils de connexion (32) connectent électriquement le capteur de flux thermique (2) avec la carte de circuit (31),
de préférence dans lequel le canal (1) est agencé et la largeur caractéristique (W1) du canal (1) est configurée de telle sorte que les fils de connexion (32) se trouvent à l'extérieur du canal (1), de préférence dans un renfoncement (41) de le corps (4).

11. Appareil selon l'une quelconque des revendications précédentes,
dans lequel la section de mesure (11) comprend au moins une branche (111, 111a, 111b, 112, 113),
dans lequel une hauteur (H11a, H11b, H12, H13) de chacune des au moins une branche (111, 111a, 111b, 112, 113) est une extension verticale maximale de la branche respective (111, 111a, 111b, 112, 113) orthogonal à l'écoulement (F) du fluide et orthogonal au plan défini par la zone sensible (21), et
dans lequel un rapport entre la hauteur (H11, H11a, H11b, H12, H13) de chacune des au moins une branche (111, 111a, 111b, 112, 113) et la largeur caractéristique (W1) est compris entre 0,5 et 1,5, de préférence entre 0,9 et 1,1
de préférence dans lequel le profil (A) de la section de mesure (11) est en forme de T ou de Γ.

12. Appareil selon l'une quelconque des revendications précédentes,
comprenant au moins un insert (13),
dans lequel le au moins un insert (13) est agencé et configuré pour définir partiellement la section de mesure (11),
de préférence dans lequel le au moins un insert (13) est inséré dans le canal (1),
de préférence dans lequel le au moins un insert (13) est réalisé dans le même matériau que le corps (4),
de préférence dans lequel le au moins un insert (13) comprend du métal ou est constitué de métal,
de préférence dans lequel le profil résultant (A) de la section de mesure (11) est en forme de Γ, T, I, E, [, ι ou L.

13. Appareil selon la revendication 12,
dans lequel au moins l'un des au moins un insert (13) est fixé au moyen d'une cale (14) et/ou au moyen d'un ajustement serré,
de préférence dans lequel la cale comprend une bille.

14. Appareil selon la revendication 11 en combinaison avec la revendication 12 ou 13,
dans lequel chacun des au moins un insert (13, 13a, 13b, 13c) est agencé et configuré pour définir partiellement au maximum deux branches (111, 111a, 111b, 112, 113), respectivement.

15. Appareil selon l'une quelconque des revendications précédentes 11 à 14,
dans lequel la hauteur (H11, H11a, H11b, H12, H13) de chacune des au moins une branche (111, 111a, 111b, 112, 113) est inférieure à 500 micromètres, de préférence comprise entre 100 et 250 micromètres.

16. Appareil selon l'une quelconque des revendications précédentes,
dans lequel au moins une partie du canal (1) et une partie de la section de mesure (11) sont formées par un métal.

17. Appareil selon l'une quelconque des revendications précédentes,
dans lequel le profil (A) de la section de mesure (11) et/ou du noyau (C) est aligné centré par rapport à l'extension latérale du capteur de flux thermique (2) et/ou de la zone sensible (21).
